# DEMANDE DE BREVET EUROPEEN

(11) **EP 1 365 320 A1**
(43) Date de publication de la demande: **26.11.2003**
(21) Numéro de dépôt: 03291175.2
(22) Date de dépôt: 20.05.2003
(51) Int. Cl.: G06F 9/44

(54) **Outil de developpement logiciel pour assurer des liens entre les modules uml et leur implementation en environnement corba**

(30) Priorité: 23.05.2002 FR 0206287
(71) Demandeur: ALCATEL, 75008 Paris (FR)
(72) Inventeur: Chischportich, Stephen, 75013 Paris (FR); Sayag, Emilie, 91240 St Michel sur Orge (FR); Depitre, Ludovic, 75017 Paris (FR)
(74) Mandataire: Chaffraix, Sylvain

(57) **Abrégé**

La présente invention consiste, d'une part à équiper automatiquement le modèle d'implémentation UML à partir du modèle d'interfaces UML (MA) grâce à une relation UML présente entre chaque classe d'interface et sa classe d'implémentation, et d'autre part à utiliser ce lien pour générer le code d'implémentation (MI) avec les spécificités CORBA.

L'invention s'applique à la transformation et l'instrumentation d'application serveur et également à la transformation et l'instrumentation d'application clientes.

## Description

L'invention concerne un outil de développement logiciel pour assurer des liens entre les modèles UML des interfaces CORBA et de leur implémentation.

UML est l'acronyme de l'expression anglaise Unified Modeling Language.

CORBA est l'acronyme de l'expression anglaise Common Object Request Broker Architecture.

IDL est l'acronyme de l'expression anglaise Interface Description Language.

Le langage UML fournit des moyens efficaces pour spécifier des systèmes logiciels et décrire un modèle de ces systèmes. Quelques ateliers logiciels, c'est-à-dire des outils de développement d'applications logicielles, permettent la génération de code à partir du modèle UML.

Pour le développement d'un système distribué basé sur CORBA et suivant un processus UML, deux modèles au moins doivent être définis à savoir : un modèle pour spécifier les interfaces IDL et un autre pour définir leur implémentation.

Les ateliers logiciels proposent des solutions pour décrire les deux sortes de modèles et générer le code IDL et l'implémentation du code à partir de ces modèles.

Mais ces outils ne permettent pas d'équiper le modèle d'interfaces UML pour réaliser un lien avec le modèle d'implémentation UML et les deux modèles restent complètement indépendants. Ceci implique la génération d'un code d'implémentation qui n'intègre pas les spécificités CORBA du système.

Pour établir un lien entre le modèle UML des interfaces IDL d'un système distribué et le modèle UML de l'implémentation de ce système, la seule solution existante consiste à :
- générer le code IDL des interfaces à partir du modèle UML,
- compiler ces interfaces avec un ORB (Object Request Broker),
- passer par une phase de retro-ingénierie pour obtenir un modèle

UML de l'implémentation à partir du code généré.
La solution qui vient d'être présentée n'est qu'une solution partielle du problème puisqu'elle ne relie que les modèles UML et ne permet pas de d'équiper le modèle d'interfaces UML afin de générer un code d'implémentation relatif à ces interfaces.

De plus cette solution dépend très fortement de la qualité de la phase de rétro-ingénierie à partir du code généré. La réalisation manuelle d'une telle phase peut garantir une bonne qualité mais restera assez inefficace, et l'automatisation au moyen d'un atelier logiciel présente à ce jour une qualité insuffisante et demande un retour manuel sur le modèle obtenu.

Un autre inconvénient provient du fait que cette solution ne procure aucune dépendance entre le modèle d'interface et le modèle d'implémentation. Ainsi, des changements, mêmes mineurs, des interfaces du modèle UML ne peuvent pas être reportés facilement sur le modèle d'implémentation.

La présente invention consiste, d'une part à équiper automatiquement le modèle d'implémentation UML à partir du modèle d'interfaces UML grâce à une relation UML présente entre chaque classe d'interface et sa classe d'implémentation, et d'autre part à utiliser ce lien pour générer le code d'implémentation avec les spécificités CORBA.

L'invention s'applique à la transformation et l'instrumentation d'application serveur et également à la transformation et l'instrumentation d'application clientes.

L'invention concerne donc aussi un outil de développement logiciel pour assurer des liens entre les modèles UML des interfaces CORBA et les implémentations clientes.

On rappelle plus précisément que dans le développement d'un système d'objets distribués dans l'environnement Corba avec le langage UML, les deux modèles suivants au moins doivent être définis:
- un modèle dénommé modèle d'analyse dans lequel les interfaces et leurs relations avec d'autres classes de haut niveau décrivent l'application.
- un modèle dénommé modèle d'implémentation, dans lequel toutes les classes de l'application y sont désignées. Dans ce modèle de nombreuses classes techniques sont ajoutées.

Selon une autre caractéristique de l'invention, il est donc proposé d'assurer un lien entre le modèle d'implémentation UML à partir du modèle d'analyse.

En outre, on rappelle qu'un document « CORBA Messaging » (contenu dans la spécification CORBA 2.4) offre quatre modèles différents pour invoquer une interface à un client à savoir :
- l'invocation synchrone (ou bidirectionnelle),
- l'invocation unidirectionnelle,
- l'invocation asynchrone avec le modèle « callback » ;
- l'invocation asynchrone avec le modèle « polling ».

Les invocations asynchrones requièrent une implémentation de classes spécifiques afin de traiter les réponses.

Il est donc proposé, conformément à l'invention pour les invocations asynchrones, de stéréotyper la relation UML « use » entre une classe (ou méthode) et une interface.

L'étiquette UML sur cette relation « use » spécifie la caractéristique de cette relation asynchrone qui peut être « callback » ou « polling ».

Ainsi à partir du modèle d'analyse on va construire automatiquement le modèle d'implémentation. Ceci va consister, comme on va le voir dans la suite, à créer une classe résumée « callback » ou « polling » à partir des interfaces selon les spécificités CORBA 2.4 et le langage C++. On va également générer le code correspondant selon les spécificités CORBA 2.4 et le langage C++.

L'invention a donc pour objet un outil de développement logiciel comprenant des moyens pour concevoir des objets d'interface UML et les générer en langage IDL, principalement caractérisé en ce qu'il comprend :
- Des moyens pour concevoir des objets d'implémentation UML et générer le code source d'implémentation correspondant (C++),
- Et en ce que les objets d'interface UML et les objets d'implémentation UML sont liés lors de la phase de conception.

Selon une autre caractéristique, les objets d'implémentation UML et les objets d'interface UML sont reliés par une relation UML présente entre chaque classe d'interface et la classe d'implémentation correspondante, ce lien étant utilisé pour générer le code d'implémentation avec les spécificités CORBA.

Un objet d'interface UML est le modèle spécifiant les interfaces IDL (Interface Description Language) d'un système distribué et l'autre objet définit leur implémentation.

Cet objet d'interface UML est le modèle d'analyse dans lequel les interfaces et leurs relations avec d'autres classes de haut niveau décrivent l'application cliente, l'autre objet étant le modèle d'implémentation dans lequel toutes les classes de l'application y sont désignées.

D'autres particularités et avantages de l'invention apparaîtront clairement à la lecture de la description qui est donnée ci-après à titre d'exemple non limitatif et en regard des dessins sur lesquels :
- la figure 1 représente un schéma illustrant l'outil de développement pour la transformation et l'instrumentation d'une classe qui implémente une interface à partir d'un modèle d'analyse;
- la figure 2, représente de façon schématique le modèle d'analyse d'une application cliente ;
- la figure 3, illustre schématiquement l'outil de développement pour la transformation et l'instrumentation de l'application cliente représentée à la figure 2.

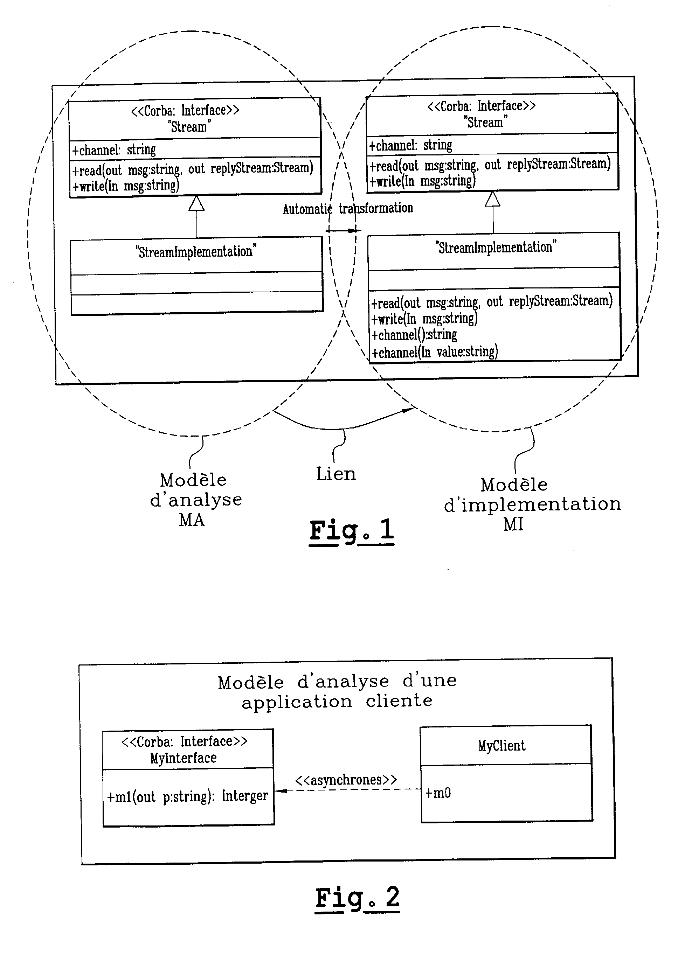

Il est proposé selon l'invention, d'équiper automatiquement le modèle d'implémentation UML à partir du modèle d'interfaces UML, référencé MA sur la figure 1, grâce à une relation UML présente entre chaque classe d'interface et sa classe d'implémentation. Il est proposé également d'utiliser ce lien pour générer le code d'implémentation avec les spécificités CORBA.

Comme l'OMG (Object Management Group) l'a défini dans le profil UML pour CORBA, les interfaces IDL doivent être décrites, dans un modèle UML par des classes d'interface stéréotypées « CORBA ».

A cette fin on va utiliser un lien UML "realize" (lien de réalisation) entre les interfaces et les classes d'implémentation correspondantes. Ce lien permet d'associer automatiquement les méthodes d'implémentation relatives à la description de l'interface IDL.

Pour chaque opération définie dans une interface IDL, dans la classe d'implémentation correspondante, une méthode est automatiquement générée avec le même nom et la bonne signature. Pour chaque attribut d'une interface IDL, 2 méthodes d'accès sont définies dans la classe d'implémentation, pour établir et obtenir la valeur de cet attribut.

L'invention s'applique tout aussi bien à des applications serveur qu'à des applications client.

Sur la figure 1 on a représenté à titre d'exemple une application serveur. Le schéma de cette figure, illustre la transformation et l'instrumentation d'une classe qui implémente une interface « Stream » à partir d'un modèle d'analyse MA.

Selon l'exemple particulier illustré par cette figure, les 4 méthodes de la classe d'implémentation « Streamimplementation » et leur signature ont été automatiquement ajoutées grâce au lien réalisé entre chaque classe.

La solution consiste également à modifier la génération du code des classes d'implémentation afin de prendre en compte les spécificités CORBA. Par exemple, la gestion des espaces de nomage, des signatures et de l'héritage des objets CORBA est automatiquement réalisée par le générateur à partir du modèle.

Dans l'exemple précédent, si l'interface « stream » appartient à un module CORBA « Messaging », la classe « Streamlmplementation » en C++ générée hérite de la classe « :: POA-Messaging :: Stream ».

Pour le modèle de l'exemple précédent, le code C++ généré est tel que précisé dans l'annexe à la description.

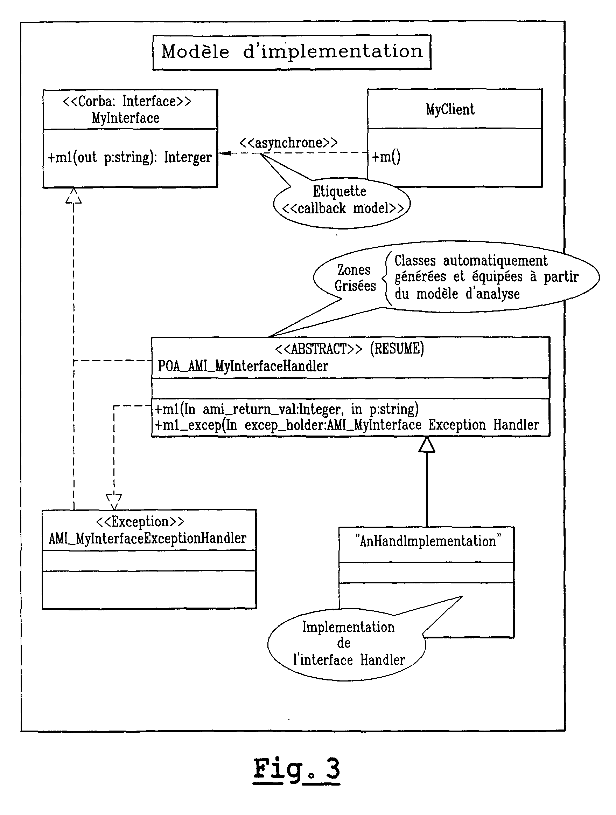

L'invention est décrite dans la suite pour un modèle d'analyse MA d'une application cliente. Le modèle d'analyse de l'application cliente est illustré sur la figure 2 et la figure 3 représente la transformation et l'instrumentation de cette application cliente afin de déterminer comment l'interface sera utilisée par le client.

Comme déjà précisé, il s'agit d'un modèle d'analyse dans lequel les interfaces et leurs relations avec d'autres classes de haut niveau décrivent l'application.

La relation UML « use » entre deux classes ou entre une méthode et une classe signifie que la méthode (ou des méthodes de la classe) utilise la classe désignée. Si cette classe désignée est une interface stéréotypée CORBA, la méthode utilise une interface.

Il est donc proposé de définir dans le modèle d'analyse de quelle manière est utilisée cette interface (synchrone ou asynchrone) en ajoutant un stéréotype dénommé « asynchrone » dans la relation UML « use ». Le stéréotype « asynchrone » est complété par une étiquette UML dénommée « callback model» ou « polling model». Cette étiquette indique comment le modèle d'implémentation est construit.

Il n'y a pas de différence entre le modèle d'analyse et le modèle d'implémentation Ml pour les invocations unidirectionnelles et bidirectionnelles. Le code de génération C++ doit juste ajouter le contenu du « stub » correspondant (l'élément correspondant), dans le corps de la classe qui utilise les interfaces.

Par exemple, comme on peut le voir illustré sur la figure 2, le modèle d'analyse montre que la méthode m() de la classe « MyClient » utilise une interface appelée « Mylnterface ». Sur ce lien le stéréotype « asynchrone » spécifie grâce à l'étiquette « callback model» de quelle manière est utilisée l'interface « MyInterface ».

Ce lien permet de modifier automatiquement le modèle UML et de créer la classe « ReplyHandler » avec les méthodes correspondantes telles que définies par la norme CORBA Messaging.

Dans le cas d'une invocation asynchrone avec un modèle « polling », il est proposé d'ajouter un stéréotype « Corba :ami_poller » sur le lien « use » et pour le modèle « callback », il est proposé d'ajouter le stéréotype « Corba :ami_callback ».

Avec ces informations, le modèle UML contient suffisamment d'informations pour modifier le modèle d'implémentation.

Selon les spécificités de CORBA Messaging, des classes doivent être introduites dans le nouveau modèle UML. Ces classes sont liées à leur interface par un lien d'implémentation afin de garantir les cohérences entre les deux modèles.

Pour mettre en oeuvre la génération du code IDL, une classe stéréotypée « CORBAInterface » qui comporte une relation « use » stéréotypée « asynchrone » ajoute une option dans le compilateur IDL pour spécifier qu'elle doit générer des squelettes et des « stub » spécifiques avec le module « Messaging » ajouté.

Pour mettre en oeuvre la génération de code C++, les classes comportent une étiquette « nocode » et « AMIPoller » ou « AMIHandler ».

Les étiquettes sont utilisées pour que la génération de code C++ puisse prendre en compte les règles et syntaxes spécifiées par le document « CORBA Messaging mapping for C++ » de l'OMG.

### ANNEXE

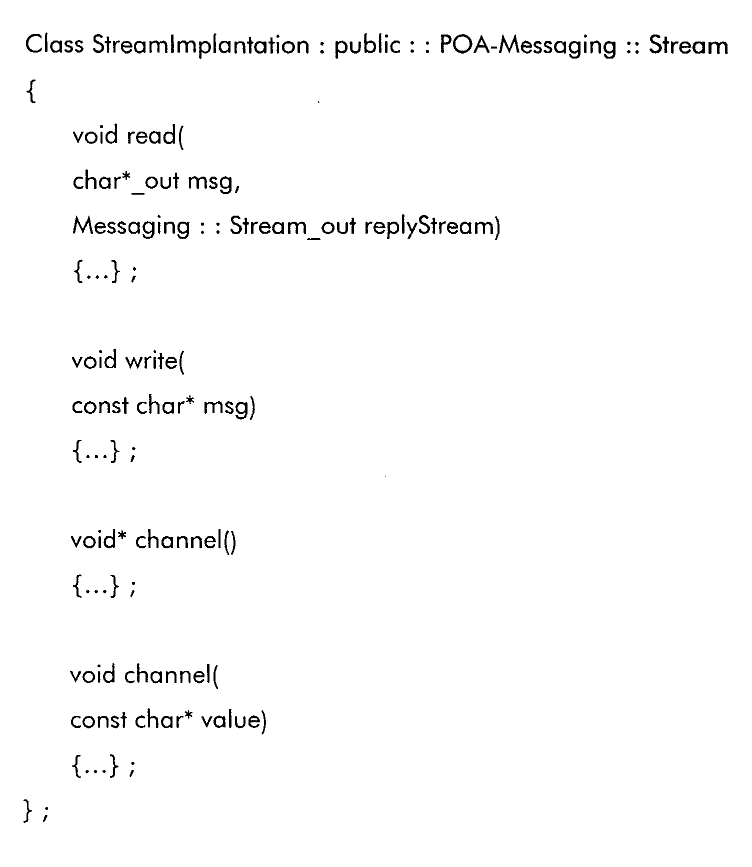

## Revendications

1. Outil de développement logiciel comprenant des moyens pour concevoir des objets d'interface UML et les générer en langage IDL, **caractérisé en ce qu'**il comprend :
- Des moyens pour concevoir des objets d'implémentation UML et générer le code source d'implémentation correspondant (C++),
- Et **en ce que** les objets d'interface UML et les objets d'implémentation UML sont liés lors de la phase de conception.

2. Outil de développement logiciel selon la revendication 1, **caractérisé en ce que** les objets d'implémentation UML et les objets d'interface UML sont reliés par une relation UML présente entre chaque classe d'interface et la classe d'implémentation correspondante, ce lien étant utilisé pour générer le code d'implémentation avec les spécificités CORBA.

3. Outil de développement logiciel selon la revendication 1 ou 2, **caractérisé en ce qu'**un objet d'interface UML est le modèle spécifiant les interfaces IDL (Interface Description Language) d'un système distribué et l'autre objet définit leur implémentation.

4. Outil de développement logiciel selon la revendication 1, 2 ou 3, **caractérisé en ce que** cet objet d'interface UML est le modèle d'analyse dans lequel les interfaces et leur relations avec d'autres classes de haut niveau décrivent l'application cliente et l'autre objet est le modèle d'implémentation dans lequel toutes les classes de l'application y sont désignées.
